# EUROPEAN PATENT SPECIFICATION

(11) **EP 1 116 198 B1**
(45) Date of publication and mention of the grant of the patent: **28.04.2004**
(21) Application number: 99933363.6
(22) Date of filing: 22.06.1999
(51) Int. Cl.: G09F 1/10, B29C 65/04

(54) **HOLDER FOR THIN LEAVES, INFORMATION SHEETS AND THE LIKE**
HALTER FÜR DÜNNE INFORMATIONSBLÄTTER UND DERGLEICHEN
PORTE-BLOC POUR FEUILLES FINES, FEUILLETS DOCUMENTAIRES ET ANALOGUES

(30) Priority: 26.06.1998 SE 9802298
(43) Date of publication of application: 18.07.2001
(73) Proprietor: HL DISPLAY AB, 128 34 Skarpnäck (SE)
(72) Inventor: JACOBSSON, Lennart, S-784 63 Borlänge (SE)
(74) Representative: Axelsson, Rolf
(86) International application number: PCT/SE1999/001122
(87) International publication number: WO 2000/000946

(56) References cited:
- EP-A1- 0 677 257
- DE-A1- 3 807 164
- FR-A1- 2 668 282
- US-A- 4 594 802
- US-A- 5 301 445
- US-A- 5 653 332

## Description

The present invention relates to a holder for thin sheets, information sheets and the like, that comprises two parallel plastic panels which are joined together through the medium of spacing material along at least two joining lines, such as to form between said plastic panels a slot-like space for accommodating said sheets.

The invention also relates to a method of manufacturing said holder.

Holders of this kind are used, inter alia, for bills, placards, posters and other information-carrying sheets, for instance product information and advertisements placed inside and outside shops and stores. The plastic panels from which the holder is made shall be transparent and shall expose announcements in an attractive manner. Such holders are described in FR-A-2 668 282 and in DE-A1-3 807 164.

Holders of this kind which are fabricated from two plastic panels that are fused together directly along at least two edges give rise to the following problems, among other things. It can be difficult to insert an information carrying sheet between the plastic panels, and then particularly relatively thin paper sheets. Particular difficulties arise when the information-carrying sheet has essentially the same height as the pocket into which it shall be inserted, since the sheet tends to wedge firmly against the joining lines between the holder panels.

Because the information sheets must therefore be made slightly smaller than the height of the pocket, relatively broad transparent parts of the holder panels are left uncovered by the information sheet along the upper and lower edges of the holder. This is relatively unattractive from the aspect of appearance and increases the danger of the information sheet being inserted crookedly in the pocket. The problem encountered with transparent panel strips that are not covered by an information sheet is particularly pronounced when the holder is provided with a plurality of pockets for receiving mutually different information sheets and separated by a plurality of connecting lines, since these sheets will be separated by relatively broad, unused parts of the holder.

It has earlier been proposed to solve this problem by placing spacing strips between the panels along their connecting lines. This facilitates the insertion and removal of information sheets into and out of a pocket, and enables the pockets to be filled up to the strip-like spacer means.

The drawbacks with this solution are, inter alia, that it complicates manufacture and makes manufacture more expensive, since the spacer means normally have the form of strips of material that are glued firmly along the edges of the panels in a separate manufacturing step. The end product will also be comprised of mutually different materials, which makes environmentally friendly recovery of the products difficult to achieve.

One object of the present invention is to provide a holder of the aforedescribed kind with which the aforesaid drawbacks of known holders are eliminated, among other things.

Another object of the invention is to provide a manufacturing technique which will enable such a holder to be manufactured very efficiently at low cost.

These objects are achieved in accordance with the invention by forming the holder from two parallel plastic panels which are mutually joined via spacing material along at least two connecting lines, said spacing material comprising material obtained from the plastic panels and joining said panels to form an integrated unit comprised of one and the same plastic material.

A holder of this kind can be produced very efficiently in one single step with the aid of a high-frequency welding operation. Since the holder comprises only one type of material, it can also be recovered in an environmentally friendly manner.

The particular characteristic features of an inventive holder will be evident from Claim 1 while the characteristic features of a method of manufacturing such a holder will be evident from the independent Claim 6. Further characteristic features of the invention will be evident from the Claims dependent on respective independent Claims.

The invention will now be described in more detail with reference to an embodiment thereof shown by way of example in the accompanying drawing.

Fig. 1 is a front view of an inventive holder.

Figs. 2 and 3 illustrate respectively the holder from one side and from beneath.

Fig. 4 is a sectional view of part of the holder, taken on the line IV-IV in Fig. 1.

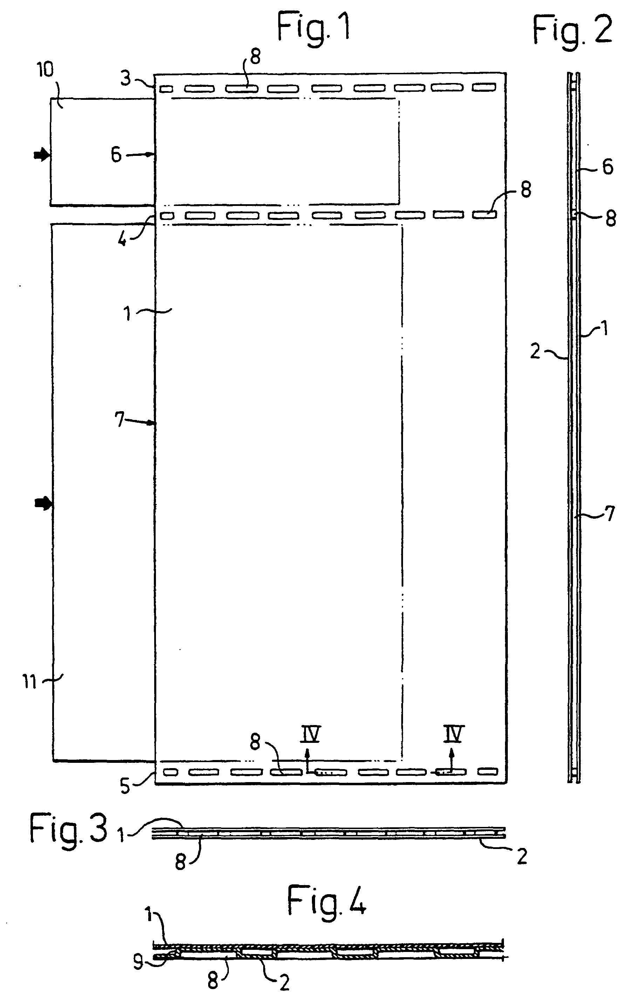

In Figs. 1-3, the numerals 1 and 2 identify a front and a rear plastic panel respectively, made of PET material, preferably APET. The panels are joined together along three connecting lines 3, 4, 5 so as to divide the slot-like space between the side panels 1 and 2 into two pockets 6 and 7 respectively.

The side panels are joined together along the connecting lines by means of high-frequency welding. High-frequency welding can be used because of the dipolar nature of plastic material, such as PET and PVC. In the case of pronounced dipolar materials, i.e. materials that have distinctive molecular asymmetry, the dipoles constantly strive to align themselves parallel to an applied field. Thus, the dipoles will oscillate at the same frequency when an alternating field is applied. In the case of the present invention there is applied a frequency of about 27 MHz which generates molecular friction in the material, therewith heating the material.

The holder illustrated in the Figures by way of example is produced with the aid of a tool which has the form of a toothed bar which is pressed against the plastic panels along the desired joining lines. The material in the two plastic panels can be caused to fuse together while forming between the panels spacing bodies that consist of the panel material, by selecting a suitable combination of temperature, time and current strength.

The plastic panels may have a thickness of 0.2-0.5 mm, preferably 0.3-0.4 mm, which provides a holder of given rigidity while nevertheless being slightly flexible. These holders can be used conveniently as poster holders or holders for product information or advertisements inside or outside shops and stores.

In the manufacture of the illustrated holder there are used plastic panels comprised of APET and having a thickness of 0.4 mm. The panels were welded together with the aid of a toothed welding tool which was heated to a temperature of about 70°C and supplied with a frequency of 27 MHz. The current strength was 1.5 ampere. Welding took place over a period of 3-4 seconds, wherewith effective fusion of the material was achieved while avoiding discolouration of the material by burning.

As will be seen from Fig. 4, the teeth on the welding tool form in one plastic panel 1 impressions 8 which cause the panel 1 to fuse together with the panel 2 via rim-like flanges which function as spacing elements 9 and which surround respective impressions 8 in the panel 1. These spacing elements 9 hold the panels 1 and 2 at a given distance apart. In the described trial run, a distance of about 1 mm was obtained between the panels 1 and 2. This enables information sheets 10, 11 to be easily inserted into the slot-like openings or pockets 6, 7 between the panels, and also allows the information sheets to have a height that corresponds to the height of the pockets, so as to minimize those parts of the holder which are not covered by the information sheets 10, 11. In the case of the inventive holder, these parts are restricted to relatively narrow strips represented by the connecting lines 3, 4, 5 produced by the welding tool.

The aforedescribed holder can be produced in one single step, by using three parallel welding tools. This provides for very efficient and cost-saving manufacture, and results in an integral product made of one and the same material that can be recovered in an environmentally friendly fashion after use.

The invention has been described above with reference to an exemplifying embodiment thereof. This embodiment can, however, be varied in several respects and the person skilled in this art may be able to choose different combinations with respect to time, material thicknesses and temperature, since it can be readily established whether the chosen parameters will provide the aforedescribed result. The Claims are thus intended to cover different combinations of these parameters provided that they give the desired result in the form of spacing bodies between the panels and formed from the plastic material in said panels.

The configuration of the welding tool used can be varied so as to obtain shorter or longer impressions in at least one plastic panel, wherewith one limit is reached when an impression extends across the full width of the panel, meaning that the tool will have the form of a bar that lacks teeth. In respect of certain applications, it may be sufficient to use only a few impressions spread across the width of the panel, while in other applications the impressions will lie so close together as to cause said spacing elements to fuse together. The number of parallel-operating tools can be chosen freely in accordance with the number of weld seams desired.

## Claims

1. A holder intended for thin sheets, information sheets and the like, and comprising two parallel plastic panels (1, 2) which are joined together along at least two joining lines (3, 4, 5) via spacing material, so as to form between the panels a slot-like space (6, 7) for receiving said thin sheets or information sheets (10, 11), **characterized in that** the holder is constructed as a single-piece unit; and **in that** said spacing material (9) is comprised of material obtained from the plastic panels (1, 2), said material having been caused to flow and form the spacing material that joins the panels together by means of a high frequency welding process.

2. A holder according to Claim 1, **characterized in that** the plastic panels (1, 2) are comprised of PET, preferably APET, or PVC, and have a thickness of 0.2-0.5 mm, preferably 0.3-0.4 mm.

3. A holder according to Claim 1 or 2, **characterized in that** the plastic panels (1, 2) are transparent; and **in that** the holder forms a poster or bill holder, wherewith the joining lines (3, 5) extend along two mutually opposite edges of the plastic panels (1, 2).

4. A holder according to any one of Claims 1-3, **characterized in that** the holder is manufactured by high-frequency welding with the aid of a tool in the form of a transverse bar; and **in that** the spacing material (9) between the plastic panels (1, 2) has the form of transverse flanges or fins that extend along an impression caused by the tool in at least one plastic panel (1).

5. A holder according to any one of Claims 1-3, **characterized in that** the holder is produced by a high-frequency welding process that uses a tool in the form of a toothed bar; and **in that** the spacing material (9) between the plastic panels (1, 2) has the form of rim-like flanges that surround impressions (8) formed by the teeth on said tool in at least one plastic panel (1).

6. A method of manufacturing a holder intended for thin sheets, information sheets and the like, and comprising two parallel plastic panels which are joined together via spacing material along at least two joining lines so as to form between the panels a slot-like space for receiving said thin sheets or information sheets, **characterized by** high-frequency welding the panels together; and by choosing the welding parameters so that panel material will flow out and form said spacing material.

7. A method according to Claim 6, **characterized by** producing said holder from plastic panels that consist of PET, preferably APET or PVC, and have a thickness of 0.2-0.5 mm, preferably 0.3-0.4 mm.

8. A method according to Claim 6 or 7, **characterized by** effecting said high-frequency welding process at a frequency of about 27 MHz and over a time period of about 3-4 seconds.

9. A method according to any one of Claims 6-8, **characterized by** effecting said high-frequency welding process with the aid of a tool heated to about 70°C.

10. A method according to any one of Claims 6-9, **characterized by** effecting said high-frequency welding process with the aid of a tool in the form of a bar that produces between said plastic panels spacers in the form of transverse flanges which extend along one impression formed by said tool in at least one plastic panel.

## Patentansprüche

1. Ein Halter, bestimmt für dünne Blätter, Informationsblätter und derartiges und zwei parallele Plastikplatten aufweisend (1, 2), die entlang von wenigstens zwei Verbindungslinien (3, 4, 5) miteinander durch Abstandsmaterial verbunden sind, um zwischen den Platten einen schlitzartigen Raum (6, 7) zu formen, um diese dünnen Blätter oder Informationsblätter (10, 11) aufzunehmen,
**dadurch gekennzeichnet,**
**dass** der Halter als eine Einstückeinheit konstruiert ist; und dadurch, dass das Abstandsmaterial (9) sich aus Material zusammensetzt, das von den Plastikplatten (1, 2) erhalten wird, wobei dieses Material mittels eines Hochfrequenzschweißprozesses zum Fließen und zur Ausformung des Abstandsmaterials, das die Platten miteinander verbindet, veranlasst wurde.

2. Halter gemäß Anspruch 1, **dadurch gekennzeichnet, dass** die Plastikplatte (1, 2) aus PET, bevorzugt APET oder PVC bestehen, und eine Dicke von 0,2 bis 0,5 mm, bevorzugt 0,3 bis 0,4 mm, aufweisen.

3. Halter gemäß Anspruch 1 oder 2, **dadurch gekennzeichnet, dass** die Plastikplatten (1, 2) durchsichtig sind und dass der Halter einen Poster- oder einen Rechnungshalter ausformt, bei dem die Verbindungslinien (3, 5) sich entlang zweier beiderseitig gegenüberliegender Kanten der Plastikplatten (1, 2) erstrecken.

4. Halter gemäß einem der Ansprüche 1 bis 3, **dadurch gekennzeichnet, dass** der Halter durch Hochfrequenzschweißen mit Hilfe eines Werkzeuges in der Form einer Querlatte hergestellt wird; und dadurch, dass das Abstandsmaterial (9) zwischen den Plastikplatten (1, 2) die Form von Querflanschen oder Finnen aufweist, die sich entlang einer Vertiefung erstrecken, die durch das Werkzeug wenigstens in einer Plastikplatte (1) bewirkt wird.

5. Halter gemäß einem der Ansprüche 1 bis 3, **dadurch gekennzeichnet, dass** der Halter mit einem Hochfrequenzschweißprozess hergestellt wird, der ein Werkzeug in der Form einer gezahnten Latte benutzt und dadurch, dass das Abstandsmaterial (9) zwischen den Plastikplatten (1, 2) die Form von randartigen Flanschen aufweist, welche Vertiefungen (8) umrunden, die von einem Zahn dieses Werkzeugs an wenigstens einer Plastikplatte (1) erzeugt werden.

6. Verfahren zur Herstellung eines Halters bestimmt für dünne Blätter, Informationsblatter und derartiges und aufweisend zwei parallele Plastikplatten, die mittels Abstandsmaterial entlang wenigstens zwei Verbindungslinien miteinander verbunden sind, um zwischen den Platten einen schlitzartigen Raum auszuformen, der die dünnen Blätter oder Informationsblätter aufnimmt, **gekennzeichnet durch** Hochfrequenzschweißen der Platten zusammen und **durch** Wählen derartiger Schweißparameter, dass das Plattenmaterial ausfließen wird und dieses Abstandsmaterial formen wird.

7. Verfahren gemäß Anspruch 6, **gekennzeichnet durch** Herstellen dieses Halters aus Plastikplatten, die aus PET, bevorzugt APET oder PVC bestehen und welche die Dicke von 0,2 bis 0,5 mm, bevorzugt 0,3 bis 0,4 mm, aufweisen.

8. Verfahren gemäß Anspruch 6 oder 7, **gekennzeichnet durch** die Durchführung dieses Hochfrequenzschweißprozesses bei einer Frequenz von ungefähr 27 MHz und höher bei einer Zeitdauer von ungefähr 3 bis 4 Sekunden.

9. Verfahren gemäß einem der Ansprüche 6 bis 8, **gekennzeichnet durch** die Durchführung des Hochfrequenzschweißprozesses mit der Hilfe eines Werkzeuges, das auf ungefähr 70° C aufgeheizt ist.

10. Verfahren gemäß einem der Ansprüche 6 bis 9, **gekennzeichnet durch** die Durchführung des Hochfrequenzschweißprozesses mit der Hilfe eines Werkzeuges in der Form einer Latte, die in den Plastikplatten Abstandshalter in der Form von Querflanschen ausformt, welche sich entlang einer Vertiefung erstrecken, die **durch** das Werkzeug in wenigstens einer Plastikplatte geformt wird.

## Revendications

1. Support pour feuilles fines, feuillets documentaires et analogues, et comprenant deux panneaux en plastique parallèles (1, 2), qui sont reliés ensemble le long d'au moins deux lignes d'assemblage (3, 4, 5) par l'intermédiaire d'un matériau d'espacement, afin de former, entre les panneaux, un espace en forme de fente (6, 7) destiné à recevoir lesdites feuilles fines ou feuillets documentaires (10, 11),
**caractérisé en ce que**
le support est construit sous la forme d'un ensemble monobloc ; et **en ce que** ledit matériau d'espacement (9) est composé d'un matériau obtenu à partir des panneaux en plastique (1, 2), ledit matériau ayant été soumis à un écoulement pour former le matériau d'espacement qui relie ensemble les panneaux au moyen d'un processus de soudage à haute fréquence.

2. Support selon la revendication 1,
**caractérisé en ce que**
les panneaux en plastique (1, 2) sont composés en PET, de préférence APET, ou PVC, et ont une épaisseur de 0,2-0,5 mm, de préférence 0,3-0,4 mm.

3. Support selon la revendication 1 ou 2,
**caractérisé en ce que**
les panneaux en plastique (1, 2) sont transparents, et **en ce que** le support forme un porte-affiches ou porte-documents, les lignes d'assemblage s'étendant le long de deux bords mutuellement opposés des panneaux en plastique (1, 2).

4. Support selon l'une quelconque des revendications 1 à 3,
**caractérisé en ce que**
le support est fabriqué par un soudage à haute fréquence à l'aide d'un outil ayant la forme d'une barre transversale ; et **en ce que** le matériau d'espacement (9) entre les panneaux en plastique (1, 2) a la forme de rebords ou d'ailettes transversales(aux) qui s'étendent le long d'une impression formée par l'outil dans au moins un panneau en plastique (1).

5. Support selon l'une quelconque des revendications 1 à 3,
**caractérisé en ce que**
le support est produit par un processus de soudage à haute fréquence qui utilise un outil ayant la forme d'une barre dentée ; et **en ce que** le matériau d'espacement (9) entre les panneaux en plastique (1, 2) a la forme de rebords en forme de couronnes qui entourent des impressions (8) formées, par les dents dudit outil dans au moins un panneau en plastique (1).

6. Procédé de fabrication d'un support pour feuilles fines, feuillets documentaires et analogues et comprenant deux panneaux en plastique parallèles qui sont reliés ensemble par l'intermédiaire d'un matériau d'espacement le long d'au moins deux lignes d'assemblage, afin de former, entre les panneaux, un espace en forme de fente destiné à recevoir lesdites feuilles fines ou feuillets documentaires,
**caractérisé par**
un soudage à haute fréquence des panneaux l'un avec l'autre ; et par le choix de paramètres de soudage de telle sorte que du matériau du panneau s'écoule pour former ledit matériau d'espacement.

7. Procédé selon la revendication 6,
**caractérisé par**
la production dudit support à partir de panneaux en plastique composés en PET, de préférence en APET ou PVC, et ayant une épaisseur de 0,2-0,5 mm, de préférence 0,3-0,4 mm.

8. Procédé selon la revendication 6 ou 7,
**caractérisé par**
la réalisation dudit processus de soudage à haute fréquence à une fréquence d'environ 27 MHz et pendant une durée d'environ 3-4 secondes.

9. Procédé selon l'une quelconque des revendications 6 à 8,
**caractérisé par**
la réalisation dudit processus de soudage à haute fréquence à l'aide d'un outil chauffé à environ 70°C.

10. Procédé selon l'une quelconque des revendications 6 à 9,
**caractérisé par**
la réalisation dudit processus de soudage à haute fréquence à l'aide d'un outil ayant la forme d'une barre qui produit entre lesdits panneaux en plastique des bagues d'espacement sous la forme de rebords transversaux qui s'étendent le long d'une impression formée par ledit outil dans au moins un panneau en plastique.
